Europäisches Patentamt

European Patent Office

Office européen des brevets

(19)

(11) Publication number: **0 293 223**
**A1**

(12) # EUROPEAN PATENT APPLICATION

(21) Application number: **88304829.0**

(22) Date of filing: **27.05.88**

(51) Int. Cl.⁴: **G 05 B 19/04**

(30) Priority: **29.05.87 GB 8712699**

(43) Date of publication of application:
**30.11.88 Bulletin 88/48**

(84) Designated Contracting States:
**AT BE CH DE ES FR GB GR IT LI LU NL SE**

(71) Applicant: **AKTIEBOLAGET ELECTROLUX**
**Luxbacken 1**
**S-105 45 Stockholm (SE)**

(72) Inventor: **Plackett, Anthony Geoffrey**
**40, Greenacres**
**Birdham West Sussex, P020 7HL (GB)**

**Newton, Stephen John**
**7 Dodsley Grove**
**Easebourne Midhurst West Sussex G029 9BE (GB)**

(74) Representative: **Arthur, Bryan Edward et al**
**Withers & Rogers 4 Dyer's Buildings Holborn**
**London EC1N 2JT (GB)**

(54) **Improvements relating to domestic appliances.**

(57) A domestic appliance such as a clothes washing machine has a control system incorporating a microprocessor 1 and is provided with fault checking means. On the occurrence of a fault, fault information is stored in a non-volatile memory preferably within the microprocessor 1 and a fault code is displayed on a display 5. The fault information may include data identifying the programme being operated, the position reached within the programme and the addresses of relevant sub-routines. After the programme has been terminated on occurrence at a fault operation can be restarted for test purposes at the function at which the fault occurred as determined by the stored fault information. The stored information may also be used to enable recovery from a programme interruption by reason of failure of the power supply and may also record a preferred programme to be selected automatically each time the appliance is powered up.

Figure 1

EP 0 293 223 A1

## Description

## IMPROVEMENTS RELATING TO DOMESTIC APPLIANCES

This inventions relates to domestic appliances and, more particularly, to an improved control systems for use with such appliances.

The invention has been developed primarily for use in appliances such as washing machines for clothes and dishwashing machines. Typically such appliances are controlled by a system programmed to perform a variety of functions.

U.K. Patent GB 2079976B discloses a clothes washing machine which is provided with fault checking facilities so that, should any hazard arise during operation, the programme sequence is terminated, all actions are turned off and the appropriate fault code is displayed. If the machine has been turned off and the fault information consequently lost, then, in order to enable the engineer to locate the fault, the machine can perform an accelerated test programme wherein the stages are shortened considerably relative to the normal wash operation programme.

An object of the present invention, which is defined in the claims appended hereto, is to provide a domestic appliance with improved features in respect of fault diagnostics and/or recovery.

Preferably the control system includes means for re starting operation after termination of a programme on occurrence of a fault at the function at which the fault occurred, determined by reference to the stored fault information.

Preferably, the control system also comprises restart means to enable the machine to continue from where it left off with a programme which was interrupted by a temporary disconnection of the power supply. The non-volatile memory storage facility assists in this respect by retaining the relevant programme information.

Preferably also, the non-volatile memory storage facility is adapted to enable the user to store a preferred programme which the machine selects upon connection of the power supply.

In order that the invention may be clearly understood and readily carried into effect, specific embodiments of the invention will now be described by way of example only with reference to the accompanying drawings, of which:-

Figure 1 shows a circuit used in an embodiment of the invention;

Figure 2 shows a circuit used in an alternative embodiment of the invention.

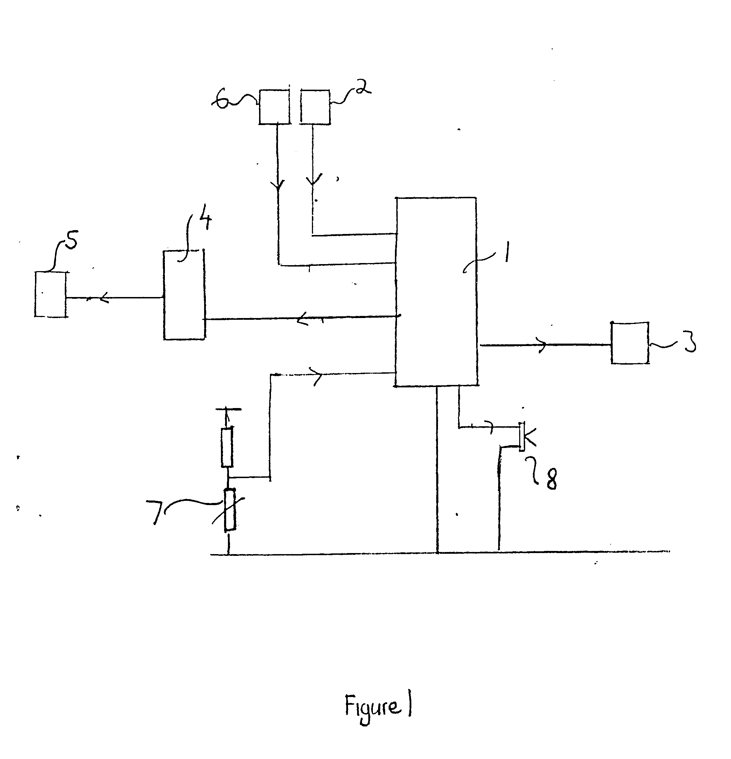

Referring now to Figure 1, this shows a circuit suitable for use in a washing machine of the invention. The circuit has a microprocessor 1, which runs the washing machine cycle. The user selects the desired programme by using keypads 2 on a control panel of the machine; this information is then fed to the microprocessor 1. The microprocessor I then sends out a control signal, in accordance with the selected programme, to electrically energisable functional components 3 of the machine which include, for example, the water heater, water pump, motor, valves and door. Simultaneously it sends out signals to a display driver unit 4, thus enabling the display driver unit 4 to instruct a control panel display 5 accordingly. The microprocessor 1 also receives information on the water level within the machine and on the water temperature from a water level indicator 6 and temperature sensor 7, respectively.

In addition to controlling the washing machine cycle, the microprocessor 1 has a non-volatile memory storage facility and is able to look for any fault in the operational functions of the appliance. If a fault is detected by the microprocessor 1 during operation, it causes a fault number to be displayed on the control panel display 5, by means of driver unit 4. It may also energise a buzzer 8 if fitted and required. The fault information is stored in the non-volatile memory and the machine is returned to a safe condition, for example the water is pumped out if the drive motor has failed with the drum full.

Provision of the non-volatile memory storage facility enables fault information to be stored even if the machine has been turned off, removing the necessity for the user to make a note of the fault that has occurred. Thus, when the service engineer comes to rectify the fault he can immediately find out what it is from the stored fault data. In addition, on power-up of the machine the microprocessor is also able to selectively energise a particular operational function, based on the stored fault data; in this way the machine does not have to be put through a complete wash programme, in order to test the faulty function or functions.

In order to provide the above-mentioned facilities microprocessor 1 is preferably of the Complementary Metal Oxide Semiconductor (CMOS) type with a low standby current requirement for maintenance of the random access memory (RAM), the power for which is supplied from an on-board Ni-Cd battery (not shown), or other suitable power source.

To minimise the information stored by the microprocessor 1, the software is organised so that there resides in the microprocessor memory a stack containing a list of subroutine addresses for each machine programme. Each programme within the stack therefore contains bits to describe the programme number, the position within the programme and the relevant subroutine addresses. Also stored whilst the software is running is the time elapsed within the current subroutine.

The provision of a non-volatile memory storage facility allows any relevant information to be stored, so that the machine can restart after a power breakdown during a programme, the programme being continued from the point at which the power failure occurred or at a point from which appropriate wash temperatures and conditions can be established. It is also possible for the user to store a preferred programme for the machine to select on power up. Alternatively the machine can be programmed to select the most frequently used programme from the last 'n' programmes, where n is a predetermined number (for example being 10).

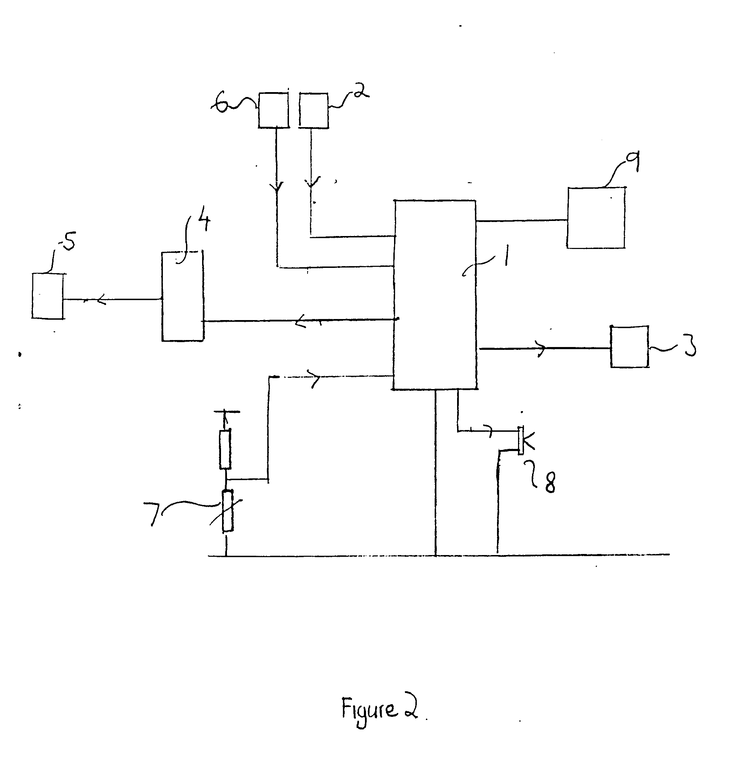

The non-volatile memory facility described above is incorporated into the microprocessor 1. An alternative embodiment of the invention is shown in Figure 2. Here the non-volatile memory is provided externally with the power supply merely having to maintain power long enough for the programme status to be entered. This role is fulfilled by unit 9 being an internal battery backed CMOS, with a Random Access Memory (RAM). Alternatively an Electrically Erase Programmable Read Only Memory (eeprom) can be used.

**Claims**

1. A domestic appliance having a control system including a microprocessor and memory means the appliance being arranged to carry out a programme of successive functions under the control of the control system and including fault checking means, the control system being arranged to terminate the programme on the occurrence of a fault and to generate and cause to be displayed a fault code indicative of the fault, characterised in that the control system includes a non-volatile memory, and is arranged, on the occurrence of a fault, to cause fault information to be stored therein.

2. A domestic appliance according to claim 1 in which the control system includes means whereby, following termination of a programme on occurrence of a fault, operation can be re-started at the function at which the fault occurred as determined by reference to the stored fault information.

3. A domestic appliance according to claim 1 or claim 2 in which the stored fault information includes data identifying the programme being operated, the position reached within the programme and relevant sub-routine addresses.

4. A domestic appliance according to claim 3 in which the non-volatile memory is also arranged to store the time elapsed within the current sub-routine and the control system is arranged, on resumption of the power supply after an interruption, to resume the programme from the point at which the interruption occurred, or so soon thereafter as any necessary temperature and operating conditions can be re-established.

5. A domestic appliance according to any preceding claim arranged to store in the non-volatile memory data indicative of a selected programme and to select that programme automatically when the appliance is powered up.

6. A domestic appliance according to claim 5 in which the stored data represent the most frequently used of a sequence of recently used programmes.

7. A domestic appliance accordingly to any preceding claim in which the non-volatile memory is a battery maintained CMOS memory.

8. A domestic appliance according to any preceding claim which is a clothes washing machine.

Figure 1

0293223

Figure 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 068 267 (INDESIT INDUSTRIA ELETTRODOMESTICI ITALIANA) * Page 6, lines 8-18; page 10, lines 4-18; page 14, line 5 - page 15, line 20; figure 1 * | 1,7,8 | G 05 B 19/04 |
| A | | 4-6 | |
| | --- | | |
| X | EP-A-0 068 266 (INDESIT INDUSTRIA ELETTRODOMESTICI ITALIANA) * Page 5, line 19 - page 6, line 3; page 13; line 21 - page 14, line 22; page 15, lines 13-17; page 19, lines 5-12; page 26, lines 6-18 * | 1,7,8 | |
| A | | 4-6 | |
| | --- | | |
| X | EP-A-0 134 610 (PHILIPS) * Page 2, line 35 - page 3, line 18; page 3, lines 23-25; page 4, lines 3-8; page 7, lines 23-29; page 12, lines 3-7 * | 2,3 | |
| | --- | | TECHNICAL FIELDS SEARCHED (Int. Cl.4) |
| A | FR-A-2 444 966 (GENERAL ELECTRIC) * Page 18, lines 4-19 * | 5 | G 05 B 19/00 |
| | ----- | | |

The present search report has been drawn up for all claims

| Place of search | Date of completion of the search | Examiner |
|---|---|---|
| THE HAGUE | 30-08-1988 | HAUSER L.E.R. |